# EUROPÄISCHE PATENTSCHRIFT

(11) **EP 3 418 077 B1**
(45) Veröffentlichungstag und Bekanntmachung des Hinweises auf die Patenterteilung: **18.11.2020**
(21) Anmeldenummer: 18166239.6
(22) Anmeldetag: 09.04.2018
(51) Int. Cl.: B60C 11/13, B60C 11/03

(54) **FAHRZEUGLUFTREIFEN**
PNEUMATIC TYRES FOR A VEHICLE
PNEUMATIQUE DE VÉHICULE

(30) Priorität: 19.06.2017 DE 102017210183
(43) Veröffentlichungstag der Anmeldung: 26.12.2018
(73) Patentinhaber: Continental Reifen Deutschland GmbH, 30165 Hannover (DE)
(72) Erfinder: Oltolina, Davide, 30163 Hannover (DE); Gleeson, Ruaidhri, 30419 Hannover (DE); Buschmeier, Jörg, 30659 Hannover (DE); Behr, Ulrich, 30167 Hannover (DE)
(74) Vertreter: Finger, Karsten

(56) Entgegenhaltungen:
- EP-A1- 3 124 290
- JP-A- 2011 084 254
- US-A1- 2003 024 621

## Beschreibung

Die Erfindung betrifft einen Fahrzeugluftreifen in Radialbauart mit einem Laufstreifen mit zumindest einer schulterseitigen Profilblockreihe, welche über ihre Umfangserstreckung mit einer Vielzahl von Querrillen versehen ist, welche die Profilblockreihe in Schulterblöcke gliedern, laufstreifeninnenseitig in eine Umfangsrille einmünden und über die Bodenaufstandsfläche des Laufstreifens hinausverlaufen, wobei innerhalb der eine Breite aufweisenden Bodenaufstandsfläche des Laufstreifens in jeder Querrille an der Umfangsrille eine Grundanhebung ausgebildet ist und wobei in jeder Querrille eine zweite Grundanhebung ausgebildet ist, wobei die Grundanhebungen in Umfangsrichtung aufeinanderfolgende Schulterblöcke aneinander anbinden.

Ein Fahrzeugluftreifen der eingangs genannten Art ist beispielsweis aus der US 2003/0024621 A1 bekannt. Der Fahrzeugluftreifen weist einen Laufstreifen mit schulterseitigen Profilblockreihen mit Querrillen auf, in welchen jeweils zwei einen gegenseitigen Abstand aufweisende, keilförmig gestaltete Grundanhebungen ausgebildet sind. Die Grundanhebungen sind daher durch geneigte Deckflächen begrenzt, welche von der einen Rillenflanke der Querrille zur anderen Rillenflanke der Querrille abfallen.

Aus der JP 2011 084 254 A ist ein Fahrzeugluftreifen mit einem Laufstreifen mit Blockreihen mit Querrillen bekannt, in welchen jeweils eine Grundanhebung ausgebildet ist. Die Grundanhebung ist in Erstreckungsrichtung der Querrille betrachtet mit einer Vertiefung versehen. Derart gestaltete Grundanhebungen sollen eine gute Fahrstabilität auf eisigem Untergrund und einen gleichmäßigen Laufstreifenabrieb ermöglichen.

Die EP 3 124 290 A1 offenbart einen Fahrzeugluftreifen mit einem Laufstreifen mit einer schulterseitigen Profilblockreihe mit Querrillen, welche innerhalb der Bodenaufstandsfläche mindestens zwei aneinander anschließende Rillenabschnitte unterschiedlicher Tiefe aufweisen, wobei die Tiefe der Rillenabschnitte stufenweise Richtung Laufstreifenrand zunimmt. Durch diese Maßnahme sollen durch "Air-Pumping" verursachte Geräuschemissionen verringert werden.

Darüber hinaus ist aus der JP H11 278 016 A ein Fahrzeugluftreifen mit einem Laufstreifen mit einer Profilblockreihe mit Querrillen bekannt, in welchen Grundanhebungen ausgebildet sind, welche die Tiefe der Querrille lokal auf 40% bis 60% der Querrillentiefe verringern und welche in der Erstreckungsrichtung der Querrillen mittig mit je einem Einschnitt versehen sind, welcher innerhalb der Grundanhebung endet. Derartige Grundanhebungen haben infolge der größeren Umfangssteifigkeit der schulterseitigen Blöcke positive Auswirkungen auf die Handlingeigenschaften, insbesondere auch bei Kurvenfahrt. Die Grundanhebungen bewirken aber auch eine lokal begrenzte Ungleichmäßigkeit der Umfangsversteifung der Schulterblockreihen, sodass ein ungleichmäßiger Abrieb der Schulterblöcke auftreten kann.

Der Erfindung liegt daher die Aufgabe zu Grunde, einen Fahrzeugluftreifen der eingangs genannten Art derart auszuführen, dass ein ungleichmäßiger Laufstreifenabrieb in den schulterseitigen Profilblockreihen nicht mehr auftritt.

Die gestellte Aufgabe wird erfindungsgemäß dadurch gelöst, dass die Grundanhebung, welche an der Umfangsrille ausgebildet ist, in radialer Richtung durch eine parallel zur Laufstreifenperipherie verlaufende Deckfläche und seitlich durch zwei Flankenflächen begrenzt ist, wobei die eine Flankenfläche an den Rillengrund der Umfangsrille anschließt.

Gemäß der Erfindung sind daher in jeder Querrille der schulterseitigen Profilblockreihe eine nahe der Umfangsrille befindliche erste Grundanhebung und zweite Grundanhebung vorgesehen. Die beiden Grundanhebungen stützen die Schulterblöcke optimal gegeneinander ab und bewirken einen gleichmäßigen Abrieb der Schulterblöcke. Nachdem durch die beiden Grundanhebungen insgesamt die Umfangsteifigkeit der schulterseitigen Profilblockreihe erhöht ist, ist ferner die Beweglichkeit der Schulterblöcke in Umfangsrichtung derart eingeschränkt, dass sie sich beim Bremsen geringer verbiegen, wodurch der Bremsweg verkürzt wird. Bei Kurvenfahrt mit hoher Geschwindigkeit versteifen die am Rand der Bodenaufstandsfläche positionierten zweiten Grundanhebungen die schulterseitige Profilblockreihe besonders vorteilhaft. Ferner bewirken die Grundanhebungen, dass die beim Abrollen am Untergrund durch die radiale Kompression der Schulterblöcke durch die Querrillen hindurch gepresste Luft abgelenkt und verwirbelt wird, sodass eine turbulente Luftströmung entsteht, welche das Auftreten von "Air-Pumping" unterdrückt und dementsprechend eine zum Abrollgeräusch zusätzliche Geräuschemission verhindert wird. Durch die geneigten Flankenflächen ist die Grundanhebung optimal abgestützt, was zur versteifenden Wirkung der Grundanhebung beiträgt.

Gemäß einer bevorzugten Ausführungsvariante ist die zweite Grundanhebung innerhalb der Bodenaufstandsfläche ausgebildet, insbesondere befindet sich das laufstreifenaußenseitige Ende der zweiten Grundanhebung am Rand der Bodenaufstandsfläche oder in einem vom Rand der Bodenaufstandsfläche in axialer Richtung gemessenen Abstand von bis zu 1% der Breite der Bodenaufstandsfläche.

Gemäß einer bevorzugten Ausführungsvariante beträgt der Abstand, in welchem die zweite Grundanhebung vor dem Rand der Bodenaufstandsfläche endet, bis zu 0,5%, insbesondere 0,5%, der Breite der Bodenaufstandsfläche.

Gemäß einer weiteren bevorzugten Ausführungsvariante ist die zweite Grundanhebung außerhalb der Bodenaufstandsfläche ausgebildet.

Ferner ist es bevorzugt, wenn die Grundanhebung, welche an der Umfangsrille ausgebildet ist, von der zweiten Grundanhebung in axialer Richtung einen Abstand von mindestens 4,0 mm aufweist.

Die versteifende Wirkung der am Rand der Bodenaufstandsfläche positionierten zweiten Grundanhebung auf die schulterseitige Profilblockreihe ist besonders vorteilhaft, wenn die zweite Grundanhebung an ihrer Basis in axialer Richtung eine Breite von 10% bis 70%, insbesondere von 30% bis 60%, der Breite des innerhalb der Bodenaufstandsfläche befindlichen Umfangsabschnittes der schulterseitigen Profilblockreihe aufweist.

Gemäß einer bevorzugten Ausführungsvariante ist die zweite Grundanhebung zumindest über den Großteil ihrer Erstreckung im Längsschnitt der Querrille entweder von einer radial nach außen gebogen verlaufenden Deckfläche begrenzt oder weist eine Einhüllende auf, die eine radial nach außen gebogen verlaufenden Fläche ist.

Die Grundanhebung, welche an der Umfangsrille ausgebildet ist, weist an ihrer Basis in axialer Richtung eine Breite von vorzugsweise 10% bis 70%, insbesondere von 30% bis 60%, der Breite des innerhalb der Bodenaufstandsfläche befindlichen Umfangsabschnittes der schulterseitigen Profilblockreihe auf.

Eine derartige Grundanhebung trägt zur Begrenzung der Beweglichkeit der Schulterblöcke auf eine für die Bremseigenschaften vorteilhafte Weise bei.

Ferner ist es bevorzugt, wenn die Flankenflächen der Grundanhebung, welche an der Umfangsrille ausgebildet ist, zur radialen Richtung jeweils unter einem Winkel von 5° bis 25°, insbesondere von höchstens 20°, geneigt sind.

Gemäß einer weiteren bevorzugten Ausführungsvariante weisen die Querrillen durch die Grundanhebungen eine in radialer Richtung lokal verringerte Tiefe auf, welche an ihrer seichtesten Stelle mindestens 1,0 mm und höchstens 50% der Profiltiefe, insbesondere 1,0 mm bis 1,4 mm, vorzugsweise 1,1 mm bis 1,3 mm, und besonders bevorzugter Weise 1,2 mm, beträgt. Grundanhebungen, welche die Tiefe derart verringern, versteifen die Profilblockreihe auf eine für den Abrieb vorteilhafte Weise.

Bevorzugter Weise weist jede Querrille an ihrer tiefsten Stelle die Profiltiefe auf. Ein gutes Wasserableitvermögen der Querrillen bleibt somit erhalten.

Weitere Merkmale, Vorteile und Einzelheiten der Erfindung werden nun anhand der Zeichnung, die schematisch ein Ausführungsbeispiel der Erfindung zeigt, näher beschrieben. Dabei zeigen
Fig. 1 eine vereinfachte Draufsicht auf einen Umfangsabschnitt einer schulterseitigen Profilblockreihe eines Laufstreifens eines Fahrzeugluftreifens mit einer Ausführungsvariante der Erfindung und
Fig. 2 einen Schnitt entlang der Linie II-II der Fig. 1.

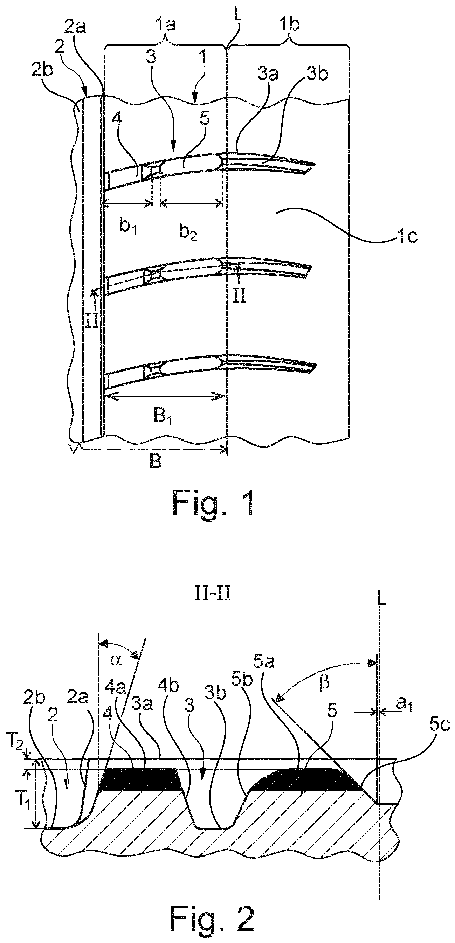

Fig. 1 zeigt eine schulterseitige Profilblockreihe 1 eines Laufstreifens eines Fahrzeugluftreifens in Radialbauart für Personenkraftwagen, Vans oder Light-Trucks. In der zweiten in Fig. 1 nicht gezeigten Laufstreifenschulter kann eine zur Profilblockreihe 1 analog ausgeführte Profilblockreihe verlaufen. Der laufstreifenaußenseitige Rand der Bodenaufstandsfläche des Laufstreifens ist in Fig. 1 und Fig. 2 jeweils durch eine gestrichelte Linie L gekennzeichnet, wobei die Bodenaufstandsfläche dem statisch ermittelten Footprint (Last bei 70 % der maximalen Tragfähigkeit bei einem Innendruck von 85 % nach E.T.R.T.O.-Norm) entspricht. Die Bodenaufstandsfläche weist in axialer Richtung eine Breite B auf (Fig. 1) und endet in bekannter Weise in der schulterseitigen Profilblockreihe 1, sodass diese somit einen innerhalb der Bodenaufstandsfläche befindlichen Umfangsabschnitt 1a und einen außerhalb der Bodenaufstandsfläche befindlichen Schulterabschnitt 1b aufweist. Der Umfangsabschnitt 1a weist an der Laufstreifenperipherie, in axialer Richtung eine Breite B₁ auf. Laufstreifeninnenseitig ist die Profilblockreihe 1 von einer Umfangsrille 2 mit Rillenflanken 2a, von welchen in Fig. 1 eine zu sehen ist, und einem Rillengrund 2b begrenzt.

Gemäß Fig. 1 ist die schulterseitige Profilblockreihe 1 mit einer Vielzahl von über den Rand der Bodenaufstandsfläche hinausverlaufenden und daher sowohl im Umfangsabschnitt 1a als auch im Schulterabschnitt 1b verlaufenden Querrillen 3 versehen, welche in Draufsicht parallel zueinander sowie leicht bogenförmig verlaufen und die Profilblockreihe 1 in Schulterblöcke 1c gliedern. Die Querrillen 3 können in Draufsicht auch gerade sowie ferner in axialer Richtung oder unter einem von der axialen Richtung um bis zu 35° abweichenden Winkel verlaufen. An der Oberfläche der Schulterblöcke 1c sind die Querrillen 3 in Umfangsrichtung jeweils durch zwei Rillenkanten 3a begrenzt, welche bis zur Umfangsrille 2 sowie beim gezeigten Ausführungsbeispiel in Draufsicht parallel zueinander verlaufen. Die Rillenkanten 3a können in an sich bekannter Weise angefast sein.

Jede Querrille 3 weist einen Rillengrund 3b sowie an ihrer tiefsten Stelle in radialer Richtung eine Tiefe T₁ (Fig. 2) von 6,0 mm bis 9,0 mm auf, wobei die Tiefe T₁ beim gezeigten Ausführungsbeispiel der jeweils vorgesehenen Profiltiefe des Laufstreifens und damit der Tiefe der Umfangsrille 2 entspricht. In jeder Querrille 3 ist innerhalb des Umfangsabschnittes 1a der Profilblockreihe 1 eine an der Umfangsrille 2 befindliche Grundanhebung 4 und eine am Rand der Bodenaufstandsfläche befindliche Grundanhebung 5 ausgebildet, wobei die Grundanhebungen 4, 5 in Umfangsrichtung unmittelbar aufeinanderfolgende Schulterblöcke 1c aneinander anbinden. Durch die Grundanhebungen 4, 5 ist die Tiefe jeder Querrille 3 in radialer Richtung lokal bis auf eine Tiefe T₂ (Fig. 2) verringert, welche mindestens 1,0 mm und höchstens 50% der Tiefe T₁, insbesondere 1,0 mm bis 1,4 mm, vorzugsweise 1,1 mm bis 1,3 mm, und besonders bevorzugter Weise 1,2 mm beträgt.

Wie Fig. 2 zeigt, ist jede an der Umfangsrille 2 ausgebildete Grundanhebung 4 in radialer Richtung durch eine parallel zur Laufstreifenperipherie und damit auch parallel zu den Rillenkanten 3a verlaufende Deckfläche 4a begrenzt. In axialer Richtung ist jede Grundanhebung 4 ferner durch zwei Flankenflächen 4b begrenzt, von welchen die eine an den Rillengrund 2b der Umfangsrille 2 und die andere an den Rillengrund 3b der Querrille 3 anschließt. Die Flankenflächen 4b sind zur radialen Richtung jeweils derart unter einem Winkel α von 5° bis 25°, insbesondere von höchstens 20°, geneigt, dass die Erstreckung jeder Grundanhebung 4 an ihrer am Rillengrund 3b der jeweiligen Querrille 3 aufsitzenden Basis größer ist als an ihrer Oberfläche 4a. An ihrer Basis weist jede Grundanhebung 4 in axialer Richtung eine Breite b₁ (Fig. 1) von 10% bis 70%, insbesondere von 30% bis 60%, der Breite B₁ des Umfangsabschnittes 1a auf. Bevorzugter Weise beträgt die Breite b₁ ferner 5,2 % bis 6,2 %, insbesondere von 5,6 %, bis 5,8 %, der Breite B der Bodenaufstandsfläche.

Beim gezeigten Ausführungsbeispiel endet jede Grundanhebung 5 laufstreifenaußenseitig in einem in axialer Richtung ermittelten Abstand a₁ vor dem Rand der Bodenaufstandsfläche (Linie L), wobei der Abstand a₁ bis zu 1%, insbesondere bis zu 0,5%, und besonders bevorzugt 0,5%, der Breite B der Bodenaufstandsfläche beträgt. Die Grundanhebungen 5 können auch unmittelbar am Rand der Bodenaufstandsfläche enden. Ferner ist jede Grundanhebung 5 in radialer Richtung durch eine Deckfläche 5a, eine im Längsschnitt der Grundanhebung 5 betrachtet radial nach außen gebogene Flankenfläche 5b und eine Flankenfläche 5c begrenzt. Die gebogene Flankenfläche 5b schließt laufstreifeninnseitig an die Deckfläche 5a an und verläuft zum Rillengrund 3b der entsprechenden Querrille 3. Die Flankenfläche 5c schließt laufstreifenaußenseitig an die Deckfläche 5a an und ist zur radialen Richtung unter einem Winkel β von 35° bis 55°, insbesondere von 43° bis 47°, geneigt. An ihrer Basis weist jede Grundanhebung 5 in axialer Richtung eine Breite b₂ (Fig. 1) von 10% bis 70%, insbesondere von 30% bis 60%, der Breite B₁ des Umfangsabschnittes 1a auf. Bevorzugter Weise beträgt die Breite b₂ ferner 8,3 % bis 9,2 %, insbesondere von 8,7 % bis 8,9 %, der Breite B der Bodenaufstandsfläche. Die Grundanhebung 5 kann an ihrer Außenfläche strukturiert sein, sodass sie anstelle einer radial nach außen gebogen verlaufenden Deckfläche eine Einhüllende aufweist, die eine radial nach außen gebogen verlaufenden Fläche ist.

Die Erfindung ist auf die beschriebene Ausführungsvariante nicht beschränkt. Insbesondere ist die eine Grundanhebung an der Umfangsrille und die andere Grundanhebung an einer beliebigen Stelle in der Querrille angeordnet. Die zweite Grundanhebung kann sich daher auch außerhalb der Bodenaufstandsfläche befinden. Bevorzugter Weise weist die erste Grundanhebung von der zweiten Grundanhebung in axialer Richtung und an den Basen der Grundanhebungen ermittelt einen Abstand von mindestens 4,0 mm auf.

### Bezugsziffernliste

- 1 ......................: schulterseitige Profilblockreihe
- 1a ....................: Umfangsabschnitt
- 1b ....................: Schulterabschnitt
- 1c ....................: Schulterblock
- 2 ......................: Umfangsrille
- 2a ....................: Rillenflanke
- 2b ....................: Rillengrund
- 3 ......................: Querrille
- 3a ....................: Rillenkante
- 3b ....................: Rillengrund
- 4 ......................: Grundanhebung
- 4a ....................: Deckfläche
- 4b ....................: Flankenfläche
- 5 ......................: Grundanhebung
- 5a ....................: Deckfläche
- 5b, 5c...............: Flankenfläche
- a₁ .....................: Abstand
- B, B₁: Breite
- b₁, b₂................: Breite
- L......................: Linie
- T₁, T₂ ...............: Tiefe
- α, β ..................: Winkel

## Patentansprüche

1. Fahrzeugluftreifen in Radialbauart mit einem Laufstreifen mit zumindest einer schulterseitigen Profilblockreihe (1), welche über ihre Umfangserstreckung mit einer Vielzahl von Querrillen (3) versehen ist, welche die Profilblockreihe (1) in Schulterblöcke (1c) gliedern, laufstreifeninnenseitig in eine Umfangsrille (2) einmünden und über die Bodenaufstandsfläche des Laufstreifens hinausverlaufen, wobei innerhalb der eine Breite (B) aufweisenden Bodenaufstandsfläche des Laufstreifens in jeder Querrille (3) an der Umfangsrille (2) eine Grundanhebung (4) ausgebildet ist und wobei in jeder Querrille (3) eine zweite Grundanhebung (5) ausgebildet ist, wobei die Grundanhebungen (4, 5) in Umfangsrichtung aufeinanderfolgende Schulterblöcke (1c) aneinander anbinden,
**dadurch gekennzeichnet,**
**dass** die Grundanhebung (4), welche an der Umfangsrille (2) ausgebildet ist, in radialer Richtung durch eine parallel zur Laufstreifenperipherie verlaufende Deckfläche (4a) und seitlich durch zwei Flankenflächen (4b) begrenzt ist, wobei die eine Flankenfläche (4b) an den Rillengrund (2b) der Umfangsrille (2) anschließt.

2. Fahrzeugluftreifen nach Anspruch 1, **dadurch gekennzeichnet, dass** die zweite Grundanhebung (5) innerhalb der Bodenaufstandsfläche ausgebildet ist.

3. Fahrzeugluftreifen nach Anspruch 2, **dadurch gekennzeichnet, dass** sich das laufstreifenaußenseitige Ende der zweiten Grundanhebung (5) am Rand der Bodenaufstandsfläche befindet.

4. Fahrzeugluftreifen nach Anspruch 2, **dadurch gekennzeichnet, dass** sich das laufstreifenaußenseitige Ende der zweiten Grundanhebung (5) in einem vom Rand der Bodenaufstandsfläche in axialer Richtung gemessenen Abstand (a₁) von bis zu 1% der Breite (B) der Bodenaufstandsfläche befindet.

5. Fahrzeugluftreifen nach Anspruch 4, **dadurch gekennzeichnet, dass** der Abstand (a₁), in welchem die zweite Grundanhebung (5) vor dem Rand (L) der Bodenaufstandsfläche endet, bis zu 0,5%, insbesondere 0,5%, der Breite (B) der Bodenaufstandsfläche beträgt.

6. Fahrzeugluftreifen nach Anspruch 1, **dadurch gekennzeichnet, dass** die zweite Grundanhebung (5) außerhalb der Bodenaufstandsfläche ausgebildet ist.

7. Fahrzeugluftreifen nach einem der Ansprüche 1 bis 6, **dadurch gekennzeichnet, dass** die Grundanhebung (4), welche an der Umfangsrille (2) ausgebildet ist, von der zweiten Grundanhebung (5) in axialer Richtung einen Abstand von mindestens 4,0 mm aufweist.

8. Fahrzeugluftreifen nach einem der Ansprüche 1 bis 7, **dadurch gekennzeichnet, dass** die zweite Grundanhebung (5) an ihrer Basis in axialer Richtung eine Breite (b₂) von 10% bis 70%, insbesondere von 30% bis 60%, der Breite (B₁) des innerhalb der Bodenaufstandsfläche befindlichen Umfangsabschnittes (1) der schulterseitigen Profilblockreihe (1) aufweist.

9. Fahrzeugluftreifen nach einem der Ansprüche 1 bis 8, **dadurch gekennzeichnet, dass** die zweite Grundanhebung (5) zumindest über den Großteil ihrer Erstreckung im Längsschnitt der Querrille (3) entweder von einer radial nach außen gebogen verlaufenden Deckfläche (5a) begrenzt ist oder eine Einhüllende aufweist, die eine radial nach außen gebogen verlaufenden Fläche ist.

10. Fahrzeugluftreifen nach Anspruch 1, **dadurch gekennzeichnet, dass** die Grundanhebung (4), welche an der Umfangsrille (2) ausgebildet ist, an ihrer Basis in axialer Richtung eine Breite (b₁) von 10% bis 70%, insbesondere von 30% bis 60%, der Breite (B₁) des innerhalb der Bodenaufstandsfläche befindlichen Umfangsabschnittes (1) der schulterseitigen Profilblockreihe (1) aufweist.

11. Fahrzeugluftreifen nach einem der Ansprüche 1 bis 10, **dadurch gekennzeichnet, dass** die Flankenflächen (4b) der Grundanhebung (4), welche an der Umfangsrille (2) ausgebildet ist, zur radialen Richtung jeweils unter einem Winkel (α) von 5° bis 25°, insbesondere von höchstens 20°, geneigt sind.

12. Fahrzeugluftreifen nach einem der Ansprüche 1 bis 11, **dadurch gekennzeichnet, dass** die Querrillen (3) durch die Grundanhebungen (4, 5) eine in radialer Richtung lokal verringerte Tiefe (T₂) aufweisen, welche an ihrer seichtesten Stelle mindestens 1,0 mm und höchstens 50% der Profiltiefe, insbesondere 1,0 mm bis 1,4 mm, vorzugsweise 1,1 mm bis 1,3 mm, und besonders bevorzugter Weise 1,2 mm, beträgt.

13. Fahrzeugluftreifen nach einem der Ansprüche 1 bis 12, **dadurch gekennzeichnet, dass** jede Querrille (3) an ihrer tiefsten Stelle die Profiltiefe aufweist.

## Claims

1. Pneumatic vehicle tyre of a radial type of construction with a tread having at least one row of profile blocks (1) on the shoulder side, which is provided over its circumferential extent with a multiplicity of transverse grooves (3), which divide the row of profile blocks (1) into shoulder blocks (1c), on the inner side of the tread open out into a circumferential groove (2) and run out over the ground contact area of the tread, wherein, within the ground contact area of the tread, having a width (B), a base elevation (4) is formed in each transverse groove (3) at the circumferential groove (2) and wherein a second base elevation (5) is formed in each transverse groove (3), wherein the base elevations (4, 5) join together shoulder blocks (1c) following one another in the circumferential direction,
**characterized**
**in that** the base elevation (4) that is formed at the circumferential groove (2) is delimited in the radial direction by a top face (4a), running parallel to the periphery of the tread, and laterally by two flank faces (4b), wherein the one flank face (4b) adjoins the groove base (2b) of the circumferential groove (2) .

2. Pneumatic vehicle tyre according to Claim 1, **characterized in that** the second base elevation (5) is formed within the ground contact area.

3. Pneumatic vehicle tyre according to Claim 2, **characterized in that** the end of the second base elevation (5) on the outer side of the tread is located at the periphery of the ground contact area.

4. Pneumatic vehicle tyre according to Claim 2, **characterized in that** the end of the second base elevation (5) on the outer side of the tread is located at a distance (a₁), measured from the periphery of the ground contact area in the axial direction, of up to 1% of the width (B) of the ground contact area.

5. Pneumatic vehicle tyre according to Claim 4, **characterized in that** the distance (a₁) at which the second base elevation (5) ends before the periphery (L) of the ground contact area is up to 0.5%, in particular 0.5%, of the width (B) of the ground contact area.

6. Pneumatic vehicle tyre according to Claim 1, **characterized in that** the second base elevation (5) is formed outside the ground contact area.

7. Pneumatic vehicle tyre according to one of Claims 1 to 6, **characterized in that** the base elevation (4) that is formed at the circumferential groove (2) is at a distance from the second base elevation (5) in the axial direction of at least 4.0 mm.

8. Pneumatic vehicle tyre according to one of Claims 1 to 7, **characterized in that** the second base elevation (5) has at its base in the axial direction a width (b₂) of 10% to 70%, in particular of 30% to 60%, of the width (B₁) of the circumferential portion (1) of the row of profile blocks (1) on the shoulder side that is located within the ground contact area.

9. Pneumatic vehicle tyre according to one of Claims 1 to 8, **characterized in that**, at least over the majority of its extent in the longitudinal section of the transverse groove (3), the second base elevation (5) is delimited by a top face (5a) extending in a radially outwardly arcuate manner or has an envelope that is a surface area extending in a radially outwardly arcuate manner.

10. Pneumatic vehicle tyre according to Claim 1, **characterized in that** the base elevation (4) that is formed at the circumferential groove (2) has at its base in the axial direction a width (b₁) of 10% to 70%, in particular of 30% to 60%, of the width (B₁) of the circumferential portion (1) of the row of profile blocks (1) on the shoulder side that is located within the ground contact area.

11. Pneumatic vehicle tyre according to one of Claims 1 to 10, **characterized in that** the flank faces (4b) of the base elevation (4) that is formed at the circumferential groove (2) are respectively inclined in relation to the radial direction at an angle (α) of 5° to 25°, in particular of at most 20°.

12. Pneumatic vehicle tyre according to one of Claims 1 to 11, **characterized in that** the transverse grooves (3) through the base elevations (4, 5) have a depth (T₂) that is locally reduced in the radial direction and at its shallowest point is at least 1.0 mm and at most 50% of the profile depth, in particular 1.0 mm to 1.4 mm, preferably 1.1 mm to 1.3 mm, and particularly preferably 1.2 mm.

13. Pneumatic vehicle tyre according to one of Claims 1 to 12, **characterized in that** each transverse groove (3) has at its deepest point the profile depth.

## Revendications

1. Pneumatique de véhicule du type à structure radiale, comprenant une bande de roulement avec au moins une rangée de blocs de sculpture (1) côté épaulement qui est munie sur son extension circonférentielle d'une pluralité de rayures transversales (3) qui divise la rangée de blocs de sculpture (1) en blocs d'épaulement (1c), débouche côté bande de roulement sur une rayure circonférentielle (2) et s'étend au-delà de la surface de contact avec le sol de la bande de roulement, dans lequel, à l'intérieur de la surface de contact avec le sol ayant une largeur (B) de la bande de roulement, un relief de fond (4) est réalisé au niveau de la rayure circonférentielle (2), et dans lequel, dans chaque rayure transversale (3), un deuxième relief de fond (5) est réalisé, les reliefs de fond (4, 5) reliant les uns aux autres des blocs d'épaulement (1c) consécutifs,
**caractérisé en ce que** le relief de fond (4), qui est réalisé au niveau de la rayure circonférentielle (2), est limité dans la direction radiale par une surface de couverture (4a) s'étendant en parallèle à la périphérie de bande de roulement et latéralement par deux surfaces de flanc (4b), ladite une surface de flanc (4b) étant adjacente au fond de rayure (2b) de la rayure circonférentielle (2).

2. Pneumatique de véhicule selon la revendication 1, **caractérisé en ce que** le deuxième relief de fond (5) est réalisé à l'intérieur de la surface de contact avec le sol.

3. Pneumatique de véhicule selon la revendication 2, **caractérisé en ce que** l'extrémité côté extérieur de la bande de roulement du deuxième relief de fond (5) se trouve au bord de la surface de contact avec le sol.

4. Pneumatique de véhicule selon la revendication 2, **caractérisé en ce que** l'extrémité côté extérieur de la bande de roulement du deuxième relief de fond (5) se trouve à une distance (a₁), mesurée du bord de la surface de contact avec le sol dans la direction axiale, de jusqu'à 1 % de la largeur (B) de la surface de contact avec le sol.

5. Pneumatique de véhicule selon la revendication 4, **caractérisé en ce que** la distance (a₁) à laquelle se termine le deuxième relief de fond (5) avant le bord (L) de la surface de contact avec le sol mesure jusqu'à 0,5 %, en particulier 0,5 %, de la largeur (B) de la surface de contact avec le sol.

6. Pneumatique de véhicule selon la revendication 1, **caractérisé en ce que** le deuxième relief de fond (5) est réalisé en dehors de la surface de contact avec le sol.

7. Pneumatique de véhicule selon l'une quelconque des revendications 1 à 6, **caractérisé en ce que** le relief de fond (4) qui est réalisé au niveau de la rayure circonférentielle (2) présente une distance d'au moins 4,0 mm du deuxième relief de fond (5) dans la direction axiale.

8. Pneumatique de véhicule selon l'une quelconque des revendications 1 à 7, **caractérisé en ce que** le deuxième relief de fond (5) présente à sa base dans la direction axiale une largeur (b₂) de 10 % à 70 %, en particulier de 30 % à 60 %, de la largeur (B₁) de la partie circonférentielle (1) se trouvant à l'intérieur de la surface de contact avec le sol de la rangée de blocs de sculpture (1) côté épaulement.

9. Pneumatique de véhicule selon l'une quelconque des revendications 1 à 8, **caractérisé en ce que** le deuxième relief de fond (5) est limité au moins sur une majeure partie de son extension en section longitudinale de la rayure transversale (3) par une surface de couverture (5a) s'étendant de manière radialement courbée vers l'extérieur ou présente une enveloppante qui est une surface s'étendant de manière radialement courbée vers l'extérieur.

10. Pneumatique de véhicule selon la revendication 1, **caractérisé en ce que** le relief de fond (4), qui est réalisé au niveau de la rayure circonférentielle (2), présente à sa base dans la direction axiale une largeur (b₁) de 10 % à 70 %, en particulier de 30 % à 60 %, de la largeur (B₁) de la partie circonférentielle (1) se trouvant à l'intérieur de la surface de contact avec le sol de la rangée de blocs de sculpture (1) côté épaulement.

11. Pneumatique de véhicule selon l'une quelconque des revendications 1 à 10, **caractérisé en ce que** les surfaces de flanc (4b) du relief de fond (4), qui est réalisé au niveau de la rayure circonférentielle (2), sont inclinées vers la direction radiale selon un angle (α) de 5° à 25°, en particulier d'un maximum de 20°.

12. Pneumatique de véhicule selon l'une quelconque des revendications 1 à 11, **caractérisé en ce que** les rayures transversales (3) présentent en raison des reliefs de base (4, 5) une profondeur (T₂) localement réduite dans la direction radiale qui mesure à son endroit le moins profond au moins 1,0 mm et au plus 50 % de la profondeur de sculpture, en particulier de 1,0 mm à 1,4 mm, de préférence de 1,1 mm à 1,3 mm, et de façon particulièrement préférée 1,2 mm.

13. Pneumatique de véhicule selon l'une quelconque des revendications 1 à 12, **caractérisé en ce que** chaque rayure transversale (3) présente à son endroit le plus profond la profondeur de sculpture.
